# EUROPEAN PATENT APPLICATION

(11) **EP 4 273 659 A1**
(43) Date of publication of application: **08.11.2023**
(21) Application number: 21927418.0
(22) Date of filing: 13.05.2021
(51) Int. Cl.: G05D 1/02

(54) **ABNORMALITY HANDLING METHOD AND APPARATUS FOR MATERIAL PUSHING ROBOT, AND SERVER AND STORAGE MEDIUM**

(30) Priority: 24.02.2021 CN 202110208861
(71) Applicant: FJ Dynamics Co., Ltd., Shenzhen, Guangdong 518000 (CN)
(72) Inventor: WU, Di, Shenzhen, Guangdong 518000 (CN); WANG, Genyuan, Shenzhen, Guangdong 518000 (CN); ZHAO, Wenquan, Shenzhen, Guangdong 518000 (CN)
(74) Representative: Zaboliene, Reda
(86) International application number: PCT/CN2021/093480
(87) International publication number: WO 2022/178985

(57) **Abstract**

A method for processing abnormality of material pushing robot, a device, a server, and a storage medium, the method includes: transmitting abnormality alarm information to a target user and obtaining real-time video data transmitted from the material pushing robot when receiving abnormality information of the material pushing robot; receiving a remote monitoring request which is transmitted from the target user based on the abnormality alarm information, and transmitting the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position; and receiving a remote control command returned by the remote control terminal, and transmitting the remote movement command to the material pushing robot, and to cause the material pushing robot to move according to the remote movement command.

## Description

### CROSS-REFERENCE TO RELATED APPLICATIONS

This application claims priority to Chinese Patent Application No. 202110208861.9, filed on February 24, 2021, the contents of which are incorporated by reference herein.

### FIELD

The subject matter herein generally relates to a pasture raising technology, for example relates to a method for processing abnormality of material pushing robot, a device, a server, and a storage medium.

### BACKGROUND

With a development and an advancement of science and technology, a pasture raising technology has combined more and more with different automated robotic devices, to improve a raising efficiency and low a labor cost. For example, an application of a material pushing robot on a pasture raising has extremely freed a workforce of material pushing manually on a pasture.

In actual situations, an environment of the pasture is complex and varied, and a behavior of raising animal has uncertainty estimation, these factors may cause an occurrence of an abnormal situation during normal operation of the material pushing robot. An abnormality processing manner of an existing material pushing robot on the market mainly depends on a manually finding and processing of one or more workers of the pasture. This does not only cause a waste of human resources, but also does not ensure that the material pushing robot can resume working instantly, thus a normal effect of the material pushing may be influenced, thus a normal effect of the material pushing is influenced, and a loss of the posture is caused.

### SUMMARY

An embodiment of the present application provides a method for processing abnormality of material pushing robot, a device, a server, and a storage medium, which can achieve a remote control of the material pushing and low a labor cost for processing the abnormality of the material pushing robot.

An embodiment of the present application provides a method for processing abnormality of material pushing robot, comprising: transmitting abnormality alarm information to a target user and obtaining real-time video data transmitted from the material pushing robot when receiving abnormality information of the material pushing robot; receiving a remote monitoring request which is transmitted from the target user based on the abnormality alarm information, and transmitting the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position; and receiving a remote control command returned by the remote control terminal, and transmitting the remote movement command to the material pushing robot, and to cause the material pushing robot to move according to the remote movement command.

An embodiment of the present application provides a device for processing abnormality of material pushing robot, comprising: an abnormality alarming module, is configured to transmit abnormality alarm information to a target user and obtain real-time video data transmitted from the material pushing robot when receiving abnormality information of the material pushing robot; a video data transmitting module, is configured to receive a remote monitoring request which is transmitted from the target user based on the abnormality alarm information, and transmit the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position; and a control command transmitting module, is configured to receive a remote control command returned by the remote control terminal, and transmit the remote movement command to the material pushing robot, and to cause the material pushing robot to move according to the remote movement command.

An embodiment of the present application provides a server, comprising: one or more processors; and a storage device storing one or more programs, wherein, when the one or more programs are executed by the one or more processors, cause the one or more processor to execute the aforementioned method for processing abnormality of material pushing robot.

A computer readable storage medium, on the computer readable storage medium where computer executable instructions being stored, wherein the executable instructions executes the aforementioned method for processing abnormality of material pushing robot when the executable instructions being executed by one or more processors.

### BRIEF DESCRIPTION OF THE DRAWINGS

FIG. 1 is a flowchart of a method for processing abnormality of material pushing robot provided by Embodiment 1 of this application.
FIG. 2 is a flowchart of a method for processing abnormality of material pushing robot provided by Embodiment 2 of this application.
FIG. 3A is a flowchart of a method for generating a remote movement command provided by Embodiment 2 of this application.
FIG. 3B is a flowchart of a method for generating a remote movement command of an alternative embodiment provided by Embodiment 2 of this application.
FIG. 3C is a view of a movement route of a material pushing robot provided by Embodiment 2 of this application.
FIG. 4 is a schematic structural view of a device for processing abnormality of material pushing robot provided by Embodiment 3 of this application.
FIG. 5 is a schematic structural view of a server provided by Embodiment 4 of this application.

### DETAILED DESCRIPTION

Detailed description will be further made below to the present disclosure with reference to the accompanying drawings and the embodiments. It should be understood that, the embodiments described herein are intended only to explain the present disclosure, and are not intended to limit the present disclosure. In addition, it also should be noted that, for convenience of description, the accompanying drawings merely illustrate some but not all of the contents related to the present disclosure.

Before discussing example embodiments in more detail, it is noted that some example embodiments are described as processes or methods depicted as flowcharts. Although the flowcharts describe the steps as sequential processes, many of the steps may be performed in parallel, concurrently or simultaneously. In addition, the order of steps may be re-arranged. The processes may be terminated when their operations are completed, but may also have additional steps not included in the figure. The processes may correspond to methods, functions, procedures, subroutines, subprograms, etc.

Otherwise, terms "first", "second" etc. may be used herein to describe various directions, actions, steps, or elements, these directions, actions, steps, or elements should not be limited by these terms. These terms are only used to distinguish one direction, action, step, or element from another direction, action, step, or element. Terms "first", "second" etc. are not intended to indicate or imply relative importance or significance or impliedly indicate quantity of the technical feature referred to. Thus, the feature defined with "first" and "second" may expressly or impliedly comprise one or more this feature. In the description of the present disclosure, "a plurality of" means two or more than two features, for example two, three, etc., unless specified otherwise.

### Embodiment 1

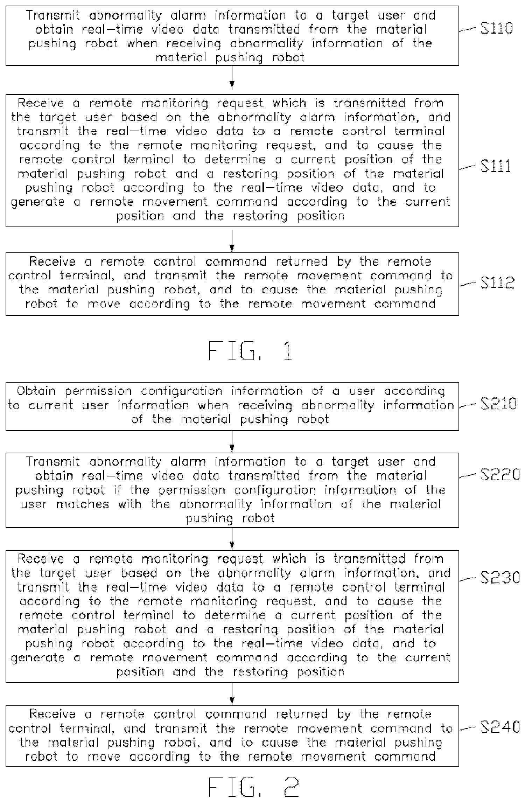

FIG. 1 is a flowchart of a method for processing abnormality of material pushing robot provided by Embodiment 1 of this application. As shown in the FIG. 1, the method for processing abnormality of material pushing robot provided by Embodiment 1 of this application includes:
S110, transmitting abnormality alarm information to a target user and obtaining real-time video data transmitted from the material pushing robot when receiving abnormality information of the material pushing robot.

In one embodiment, the material pushing robot itself has a function for monitoring a device abnormal state , the material pushing robot can monitor multiple data of itself during a work process, such as a battery power, a work state, a traveling direction, a parameter of each sensor, etc., to monitor whether an abnormal situation, such as a too low power, a collision with one or more obstacles, a damage of the material pushing robot, etc., is occurred during a currently work. The monitoring data of the material pushing robot can be uploaded to a server, in the embodiment, the monitoring data of the material pushing robot can be uploaded to a IOT (Internet of Things) server, a user can search and acquire the monitoring data in the IOT server.

When the material pushing robot detects an occurrence of an abnormal state of itself, the material pushing robot generates abnormality information and simultaneously performs a video capturing on a current work environment, and feeds back the abnormality information together with a captured real-time video data to the IOT server. When receiving the abnormality information transmitted from the material pushing robot, the IOT server transmits the abnormality alarm information to a corresponding target user immediately, to inform the user to process the abnormal situation. The material pushing robot can perform the capturing on the current work environment when occurring the abnormal state, thus a capturing time can be reduced, a power usage of the material pushing robot is lowered; the material pushing robot can also start to perform the capturing on the work environment from an beginning of the work, thus more environment data can be obtained, it is convenient to determine an occurrence reason of the abnormality.

S120, receiving a remote monitoring request which is transmitted from the target user based on the abnormality alarm information, and transmitting the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position.

In one embodiment, after receiving the abnormality alarm information, the target user needs to take action to address an abnormality problem. In the embodiment, the IOT server is coupled to the remote control terminal, the target user can operate the remote control terminal to initiate the remote monitoring request to the IOT server, and the IOT server transmits the real-time video data which is transmitted from the material pushing robot to the remote control terminal when receiving the remote monitoring request. After receiving the real-time video data, the remote control terminal performs a processing, such as an image processing, on the real-time video data, and determines the current position of the material pushing robot and the restoring position of the material pushing robot. The current position is the position where the material pushing robot is in the current work environment, and the restoring position corresponds to a reset point of the material pushing robot, such as a position of a charging station of the material pushing robot. After determining the current position of the material pushing robot and the restoring position of the material pushing robot, the remote movement command is generated according to the current position and the restoring position, the remote movement command is configured to control the material pushing robot to move from the current position to the restoring position. If the restoring position is the position of the charging station of the material pushing robot, the position of the charging station can be fixed, thus the restoring position can be prestored in the IOT server.

In one embodiment, after the IOT server transmits the real-time video data to the remote control terminal, the target user can view the real-time video data via the remote control terminal, thus the current position of the material pushing robot and the restoring position of the material pushing robot can also be determined via a marking of the user by himself/herself after viewing the real-time video data via the remote control terminal. Thus, the target user can address the abnormality problem without a need to come to a work site of the material pushing robot, but can log onto the remote control terminal to perform a remote control on the material pushing robot, the manpower of the one or more workers on the pasture is extremely freed, and an efficiency for processing the abnormality is improved.

S130, receiving a remote control command returned by the remote control terminal, and transmitting the remote movement command to the material pushing robot, and to cause the material pushing robot to move according to the remote movement command.

In one embodiment, the remote control command generated by the remote control terminal will be fed back to the IOT server, the IOT server then transmits the remote control command to the material pushing robot, the material pushing robot thus moves from the current position to the restoring position according to the remote control command, namely the material pushing robot returns and restarts to perform a planning of a work route.

The method for processing abnormality of material pushing robot provided by Embodiment 1 of this application transmits abnormality alarm information to the target user and obtains real-time video data transmitted from the material pushing robot via when receiving abnormality information of the material pushing robot; receives the remote monitoring request which is transmitted from the target user based on the abnormality alarm information, and transmits the real-time video data to the remote control terminal according to the remote monitoring request, and to cause the remote control terminal to determine the current position of the material pushing robot and the restoring position of the material pushing robot according to the real-time video data, and to generate the remote movement command according to the current position and the restoring position; and receives the remote control command returned by the remote control terminal, and transmits the remote movement command to the material pushing robot, and to cause the material pushing robot to move according to the remote movement command. A remote control of the material pushing robot can be achieved, the user can perform an abnormality processing on the material pushing robot via the remote control terminal, a maintaining on site does not need, the labor cost for processing the abnormality of the material pushing robot is lowered, and the efficiency for processing the abnormality can be improved.

### Embodiment 2

FIG. 2 is a flowchart of a method for processing abnormality of material pushing robot provided by Embodiment 2 of this application, the embodiment is a further refined of the aforementioned embodiment. As shown in the FIG. 2, the method for processing abnormality of material pushing robot provided by Embodiment 2 of this application includes:
S210, obtaining permission configuration information of a user according to current user information when receiving abnormality information of the material pushing robot.

In one embodiment, the permission configuration information of the user is information pre-configured by the user via the remote control terminal, and is configured to determine a relationship between each user and the material pushing robots, and mainly includes one or more user IDS (identities), one or more preset material pushing robot IDs, and one or more alarming modalities. Each user ID is configured to refer to a detail user, and can be a user number, a phone number, an address of a mailbox, and so on. Each preset material pushing robot ID is a material pushing robot number, and a unique material pushing robot can be determined according to the material pushing robot ID. Each alarming modality is an alarming manner when the material pushing robot is abnormal, for example an SMS (short message service) message, an electronic main (email), a phone, a small video, an image, a Dingding, a WeChat, or the like. The user can amend the permission configuration information of the user in any time via the remote control terminal. When the user logs onto the remote control terminal, the remote control terminal will automatically establish a network connection with the ITO server, and feed back current user information to the ITO server. The current user information is information of the user who currently logs onto the remote control terminal, and includes a current user ID, and the ITO server can obtain a corresponding permission configuration information of the user according to the current user ID.

There are typically numerous workers and there are typically numerous material pushing robots on the pasture, different workers manage different material pushing robots, a situation that some workers cooperatively manage one material pushing robot may be existed, and a situation that some workers cooperatively manage some material pushing robots may be existed. Thus in the permission configuration information of the user, the number of the user IDs may be many, the number of the preset material pushing robot IDs may also be many, and the alarming modalities may be many. For example, in the permission configuration information of the user, the user IDs include: 12345678910 and 12345678901 @xx.com, the preset material pushing robot IDs include: FJSZ000001007 and FILJ3820B00001SX, and the alarming modalities include: the SMS message and the email.

S220, transmitting abnormality alarm information to a target user and obtaining real-time video data transmitted from the material pushing robot if the permission configuration information of the user matches with the abnormality information of the material pushing robot.

In one embodiment, the abnormality information of the material pushing robot includes a current material pushing robot ID and abnormality data, the abnormality data is detail information of the abnormality occurred on the material pushing robot, such as a too low power, a collision with one or more obstacles, and a damage of the device, or can be an abnormal code number corresponding to the detail information of the abnormality.

Determining whether the permission configuration information of the user matches with the abnormality information of the material pushing robot, also is determining whether the user owns a management right of the material pushing robot which currently occurs the abnormality. Particularly: whether the current material pushing robot ID is the same as one preset material pushing robot ID is determined; the abnormality alarm information is generated according to the alarming modalities and the abnormality data if the preset material pushing robot ID is the same as the one preset material pushing robot ID; the user referred by the user ID is taken as the target user, and the abnormality alarm information is transmitted to the target user. Namely, firstly whether the current material pushing robot ID is the same as the one preset material pushing robot ID is determined, and if the preset material pushing robot ID is the same as the one preset material pushing robot ID, it is indicated that the user who currently logs onto the remote control terminal owns the management right of the material pushing robot which currently occurs the abnormality, at this moment the ITO server generates the abnormality alarm information according to the abnormality data and the alarming modalities, and transmits the abnormality alarm information to a corresponding target user, and to cause the target user to know a corresponding abnormal situation. When the abnormality alarm information is transmitted, the IOT server can synchronously obtain and store the real-time video data transmitted from the material pushing robot.

S230, receiving a remote monitoring request which is transmitted from the target user based on the abnormality alarm information, and transmitting the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position.

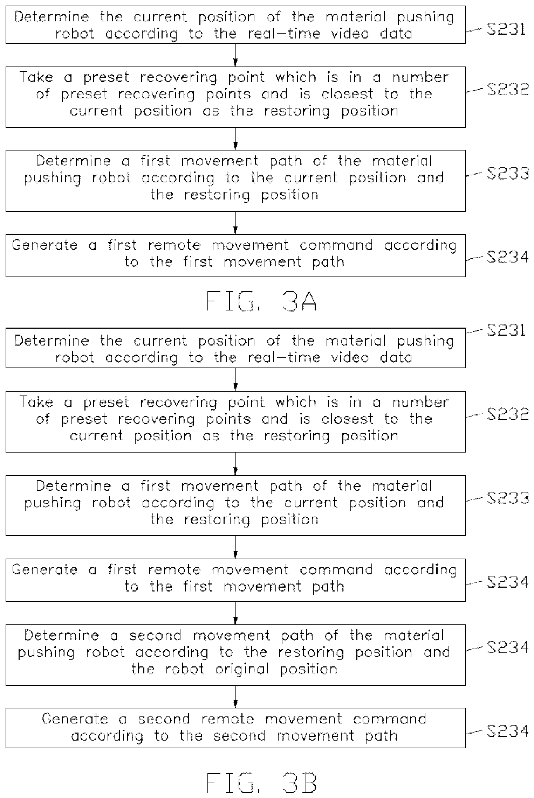

In one embodiment, as shown in FIG. 3A, a detail of the remote control terminal generating the remote movement command mainly includes:
S231, determining the current position of the material pushing robot according to the real-time video data.

In detail, the IOT server and the remote control terminal can achieve a transmission of the real-time video data via a websocket. The remote control terminal determines the current position of the material pushing robot via performing an image processing on the real-time video data, or can be that the user marks the current position of the material pushing robot via the remote control terminal.

S232, taking a preset recovering point which is in a number of preset recovering points and is closest to the current position as the restoring position.

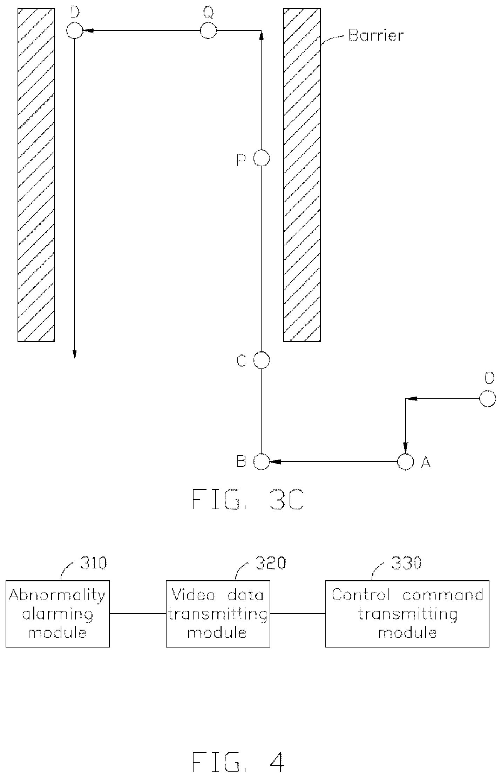

In one embodiment, the preset recovering points are some reset points or some work recovering points which are preset on a work roue of the material pushing robot, which are intermediate points different from the position of the charging station of the material pushing robot. In the embodiment, one preset recovering point which is closest to the current position is taken as the restoring position of the material pushing robot. For example, as shown in FIG. 3C, on the work route (the work route is preset when the material pushing robot works, as a direction shown by an arrow in the FIG. 3C) of the material pushing robot, four preset recovering points (are respectively represented by a point A, a point B, a point C, and a point D), and the position of the charging station of the material pushing robot is a robot original position O of the robot (is represented by an original point O). The material pushing robot starts from the original point O, and moves along the work route. When the abnormality is occurred, the current position of the material pushing robot is a point P, and the preset recovering point closest to the current position point P is the point C, thus the restoring position is the point C.

In one embodiment, when the material pushing robot occurs the abnormality, for the route that the material pushing robot has gone through, it can be determined to be no obstacle (as a section of a route from the original point O to the point C in the FIG. 3C), and for the route that the material pushing robot has not gone through, it can be difficult to determine whether one or more obstacles are on the route (as a section of a route from the point P to the point D in the FIG. 3C). To determine the restoring position, a preset recovering point which is in a number of preset recovering points on the route that the material pushing robot has gone through and is closest to the current position can be preferentially selected to be the restoring position. For example, if the current position of the material pushing robot is the point Q, which although is closest to the point D, because the section of the route from the point Q to the point D is the route that the material pushing robot has not gone through, thus the point C can be still selected to be the restoring position. Thus, when the material pushing robot responses to the obstacle to occur the abnormality, the restoring position can be quickly moved to via no obstacle route.

S233, determining a first movement path of the material pushing robot according to the current position and the restoring position.

S234, generating a first remote movement command according to the first movement path.

In one embodiment, the first movement path is a movement path that the material pushing robot moves from the current position to a determined restoring position, and a corresponding movement command is the first remote movement command. After the remote control terminal generates the first remote movement command, the first remote movement command can be transmitted to the IOT server, and the first remote movement command is transmitted to the material pushing robot by the IOT server, thus to cause the material pushing robot to move to the restoring position according to the first remote movement command, namely, to move to a preset work recovering point. After the material pushing robot moves to the preset work recovering point, the material pushing robot can continue to return to the position of the charging station to perform a next work, or can wait at the preset work recovering point until the abnormality problem is processed completely, move continuously along a current route, and return to the position of the charging station after completing the current work to perform a next work.

If the material pushing robot continues to return to the position of the charging station to perform the next work after moving to the preset work recovering point, S235-S236 are further included, as shown in FIG. 3B.

S235, determining a second movement path of the material pushing robot according to the restoring position and the robot original position.

S236, generating a second remote movement command according to the second movement path.

In one embodiment, after the material pushing robot moves to the preset work recovering point (namely the restoring position), at this moment returning from the preset work recovering point to the position of the charging station (namely the robot original position) is the second movement path, and a corresponding movement command is the second remote movement command.

Optionally, the second movement path is a path between one preset work recovering point and the original point O, this is a section of a path capable of being pre-determined, thus the second movement path can be pre-stored, and the corresponding second remote movement command can be also stored. After determining the restoring position, the corresponding second remote movement command can be invoked, a generating speed of the command is quicker. For example, a remote movement command from the point A to the original point O, a remote movement command from the point B to the original point O, a remote movement command from the point C to the original point O, and a remote movement command from the point D to the original point O are pre-stored, if the restoring position is the point C, thus the remote movement command from the point C to the original point O can be directly invoked to be the second remote movement command.

After the remote control terminal generates the second remote movement command, the first remote movement command and the second remote movement command are transmitted together to the IOT server, and the first remote movement command and the second remote movement command are transmitted to the material pushing robot by the IOT server, thus to cause the material pushing robot to move to the robot original position according to the first remote movement command and the second remote movement command.

S240, receiving a remote control command returned by the remote control terminal, and transmitting the remote movement command to the material pushing robot, and to cause the material pushing robot to move according to the remote movement command.

In one embodiment, the remote control command generated by the remote control terminal will be fed back to the IOT server, the IOT server then transmits the remote control command to the material pushing robot, the material pushing robot thus moves from the current position to the restoring position according to the remote control command, namely the material pushing robot returns and restarts to perform a planning of a work route.

The method for processing abnormality of material pushing robot provided by Embodiment 2 of this application achieves a remote control of the material pushing robot, the user can perform an abnormality processing on the material pushing robot via the remote control terminal, a maintaining on site does not need, the labor cost for processing the abnormality of the material pushing robot is lowered, and the efficiency for processing the abnormality can be improved. A management intensity of the material pushing robot can be improved via the permission configuration information of the user, a management confusion is avoided, and a data security is also improved.

### Embodiment 3

FIG. 4 is a schematic structural view of a device for processing abnormality of material pushing robot provided by Embodiment 3 of this application. The above device for processing abnormality of material pushing robot can execute the method for processing abnormality of material pushing robot provided by any embodiment of the present application, and has functional modules and beneficial effects corresponding to the execution method. Technology details that not described in detail in the embodiment can refer to the method provided by any embodiments of the present application.

As shown in the FIG. 4, the device for processing abnormality of material pushing robot provided by Embodiment 3 of this application includes: an abnormality alarming module 310, a video data transmitting module 320, and a control command transmitting module 330, where:

The abnormality alarming module 310 is configured to transmit abnormality alarm information to a target user and obtain real-time video data transmitted from the material pushing robot when receiving abnormality information of the material pushing robot.

The video data transmitting module 320 is configured to receive a remote monitoring request which is transmitted from the target user based on the abnormality alarm information, and transmit the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position.

The control command transmitting module 330 is configured to receive a remote control command returned by the remote control terminal, and transmit the remote movement command to the material pushing robot, and to cause the material pushing robot to move according to the remote movement command.

In one embodiment, the remote control terminal is specifically configured to:
determine the current position of the material pushing robot according to the real-time video data; and take a preset recovering point which is in a number of preset recovering points and is closest to the current position as the restoring position.

In one embodiment, the remote control terminal is further configured to: determine a first movement path of the material pushing robot according to the current position and the restoring position; and generate a first remote movement command according to the first movement path.

In one embodiment, the remote control terminal is further configured to: determine a second movement path of the material pushing robot according to the restoring position and the robot original position; and generate a second remote movement command according to the second movement path.

In one embodiment, the abnormality alarming module 310 includes: a permission configuration information of the user obtaining unit, is configured to obtain permission configuration information of a user according to current user information when receiving abnormality information of the material pushing robot; and an abnormality alarm information transmitting unit, is configured to transmit abnormality alarm information to a target user if the permission configuration information of the user matches with the abnormality information of the material pushing robot.

In one embodiment, the permission configuration information of the user includes one or more preset material pushing robot IDs and one or more alarming modalities, the abnormality information of the material pushing robot includes a current material pushing robot ID and abnormality data, the abnormality alarm information transmitting unit is specifically configured to: determine whether the current material pushing robot ID is the same as one preset material pushing robot ID; generate the abnormality alarm information according to the alarming modalities and the abnormality data if the preset material pushing robot ID is the same as the one preset material pushing robot ID; and take the user referred by the user ID as the target user, and transmit the abnormality alarm information to the target user.

In one embodiment, a number of the preset material pushing robot IDs is at least one, and a number of each alarming modality is at least one of a group consisting of an SMS message, an email, a phone, a small video, and an image.

The device for processing abnormality of material pushing robot provided by Embodiment 3 of this application uses the abnormality alarming module, the video data transmitting module, and the control command transmitting module to achieve a remote control of the material pushing robot, the user can performs an abnormality processing on the material pushing robot via the remote control terminal, a maintaining on site does not need, the labor cost for processing the abnormality of the material pushing robot is lowered, and the efficiency for processing the abnormality can be improved.

### Embodiment 4

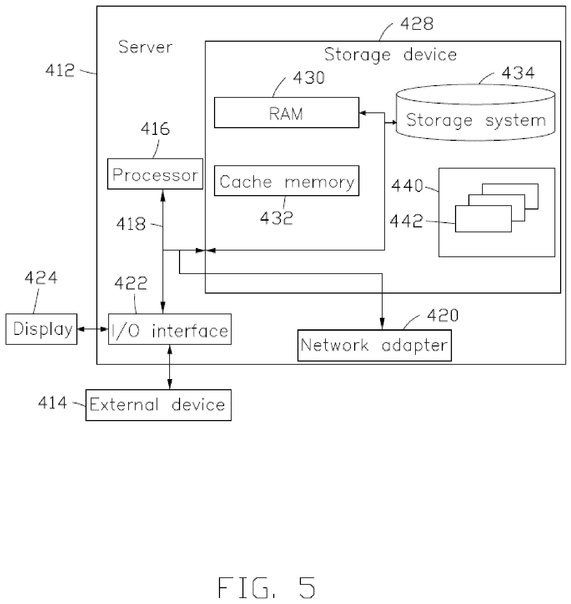

FIG. 5 is a structural schematic diagram of a server provided by Embodiment 4 of this application. FIG. 5 shows a block diagram of an exemplary server 412 suitable for implementing the embodiments of the present application. The server 412 shown in FIG. 5 is only one example, and should not bring any limitation to the functions and usage scope of the embodiments of the present application.

As shown in FIG. 5, the server 412 is represented in the form of a general-purpose device. The components of the server 412 may include but not limited to: one or more processors 416, a storage device 428, and a bus 418 connecting different system components (including the storage device 428 and the one or more processors 416).

The bus 418 represents one or more of several types of bus structures, including a storage device bus or a storage device controller, a peripheral bus, a graphics acceleration port, a processor, or a local bus using any of multiple bus structures. For example, these architectures include but not limited to: Industry Standard Architecture (ISA) bus, Micro Channel Architecture (MCA) bus, enhanced ISA bus, Video Electronics Standards Association (VESA) local bus, and Peripheral Component Interconnect (PCI) bus.

In some embodiments, the server 412 includes a variety of computer system readable media. These media can be any available media that can be accessed by the server 412, including volatile and non-volatile media, removable and non-removable media.

The storage device 428 may include a computer system readable medium in the form of volatile memory, such as a Random Access Memory (RAM) 430 and/or a cache memory 432. The server 412 may include other removable/non-removable, or volatile/nonvolatile computer system storage media. Merely as an example, the storage system 434 may be used to read from and write to the non-removable and non-volatile magnetic media (not shown in FIG. 5, and commonly referred to as "hard drives"). Although not shown in FIG. 5, a magnetic disk drive for reading from and writing to a removable and non-volatile magnetic disk (such as "floppy disk") and an optical disk drive for reading from and writing to a removable and non-volatile optical disk, such as Compact Disc Read-Only Memory (CD-ROM), Digital Video Disc-Read Only Memory (DVD-ROM) or other optical media, may be provided. In these cases, each drive may be connected to the bus 418 through one or more data medium interfaces. The storage device 428 may include at least one program product that has a set of (for example, at least one) program modules configured to perform the functions of any embodiment of the present application.

A program/utility tool 440 having a set of (at least one) program modules 442 can be stored in, for example, the storage device 428, such program module 442 includes but not limited to: operating system, one or more application programs, other program modules and program data, each or a combination of these examples may include the realization of a network environment. The program module 442 generally executes the functions and/or methods in the described embodiments of the present invention.

The server 412 may also communicate with one or more external devices 414 (such as keyboard, pointing device, display 424, etc.), and may also communicate with one or more devices that enable users to interact with the server 412, and/or communicate with any device (e.g., network card, modem, etc.) that enables the server 412 to communicate with one or more other computing devices. Such communication may be performed through an input/output (I/O) interface 422. In addition, the server 412 may also communicate with one or more networks (for example, Local Area Network (LAN), Wide Area Network (WAN) and/or public network such as Internet) through a network adapter 420. As shown in FIG. 5, the network adapter 420 communicates with other modules of the server 412 through the bus 418. It should be understood that, although not shown in the figure, other hardware and/or software modules can be used in conjunction with the server 412, including but not limited to: microcode, device driver, redundant processing unit, external disk drive array, Redundant Arrays of Independent Drives (RAID) system, tape drive, and data backup storage system, etc.

The processor 416 executes a variety of functional applications and data processing by running the programs stored in the storage device 428, for example, to implement the method for processing abnormality of material pushing robot provided in the embodiments of the present application, the method can include: transmitting abnormality alarm information to a target user and obtaining real-time video data transmitted from the material pushing robot via when receiving abnormality information of the material pushing robot; receiving a remote monitoring request which is transmitted from the target user based on the abnormality alarm information, and transmitting the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position; and receiving a remote control command returned by the remote control terminal, and transmitting the remote movement command to the material pushing robot, and to cause the material pushing robot to move according to the remote movement command.

### Embodiment 5

Embodiments of the present application further provide a computer-readable storage medium on which a computer program is stored, where the program, when executed by a processor, implements the method for processing abnormality of material pushing robot as provided in all the embodiments of the present application, the method can include: transmitting abnormality alarm information to a target user and obtaining real-time video data transmitted from the material pushing robot via when receiving abnormality information of the material pushing robot; receiving a remote monitoring request which is transmitted from the target user based on the abnormality alarm information, and transmitting the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position; and receiving a remote control command returned by the remote control terminal, and transmitting the remote movement command to the material pushing robot, and to cause the material pushing robot to move according to the remote movement command.

The computer storage media of the embodiment of the present application may adopt any combination of one or more computer-readable media. The computer-readable medium may be a computer-readable signal medium or a computer-readable storage medium. The computer-readable storage medium may be, for example but not limited to, electrical, magnetic, optical, electromagnetic, infrared, or semiconductor system, apparatus or device, or any combination thereof. Examples of the computer-readable storage media (non-exhaustive list) include: electrical connection with one or more wires, portable computer disk, hard disk, RAM, Read-Only Memory (ROM), Erasable Programmable Read Only Memory (EPROM) or flash memory, optical fiber, portable CD-ROM, optical storage device, magnetic storage device, or any suitable combination thereof. In this document, the computer-readable storage medium can be any tangible medium that contains or stores a program, where the program can be used by or used in combination with the instruction execution system, apparatus or device.

The computer-readable signal medium may include data signals propagated in the baseband or as a part of carrier waves, and the computer-readable signal medium bears the computer-readable program codes. Such propagated data signals can be in many forms, including but not limited to electromagnetic signals, optical signals, or any suitable combination thereof. The computer-readable signal medium may also be any computer-readable medium other than the computer-readable storage medium, and the computer-readable medium may send, propagate or transmit the programs used by or used in combination with the instruction execution system, apparatus or device.

The program codes contained on the computer-readable medium can be transmitted by any suitable medium, including but not limited to wireless, wire, optical cable, Radio Frequency (RF), etc., or any suitable combination thereof.

The computer program codes for performing the operations of the present application can be compiled in one or more programming languages or a combination of multiple programming languages, where the programming languages include the object-oriented programming languages such as Java, Smalltalk, C++, and also include the conventional procedural programming languages such as "C" language or similar programming languages. The program codes can be executed entirely on a user computer, executed partly on a user computer, executed as an independent software package, executed partly on a user computer and partly on a remote computer, or executed entirely on a remote computer or server. In the case of a remote computer, the remote computer can be connected to the user computer through any kind of network including LAN or WAN, or can be connected to an external computer (for example, using the Internet service provider to connect via the Internet).

## Claims

1. A method for processing abnormality of material pushing robot comprising:
transmitting abnormality alarm information to a target user and obtaining real-time video data transmitted from the material pushing robot when receiving abnormality information of the material pushing robot;
receiving a remote monitoring request which is transmitted from the target user based on the abnormality alarm information, and transmitting the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position; and
receiving a remote control command returned by the remote control terminal, and transmitting the remote movement command to the material pushing robot, and to cause the material pushing robot to move according to the remote movement command.

2. The method according to claim 1, wherein determining the current position of the material pushing robot and the restoring position of the material pushing robot according to the real-time video data further comprises:
determining the current position of the material pushing robot according to the real-time video data; and
taking a preset recovering point which is in a plurality of preset recovering points and is closest to the current position as the restoring position.

3. The method according to claim 1, wherein generating the remote movement command according to the current position and the restoring position further comprises:
determining a first movement path of the material pushing robot according to the current position and the restoring position; and
generating a first remote movement command according to the first movement path.

4. The method according to claim 3, wherein after generating the first remote movement command according to the first movement path, the method further comprises:
determining a second movement path of the material pushing robot according to the restoring position and a robot original position;
generating a second remote movement command according to the second movement path. and

5. The method according to claim 1, wherein transmitting the abnormality alarm information to the target user when receiving the abnormality information of the material pushing robot further comprises:
obtaining permission configuration information of a user according to current user information when receiving the abnormality information of the material pushing robot; and
transmitting the abnormality alarm information to the target user according to a result that the permission configuration information of the user matches with the abnormality information of the material pushing robot.

6. The method according to claim 5, wherein the permission configuration information of the user is provided with one or more preset material pushing robot identities and one or more alarming modalities; the abnormality information of the material pushing robot is provided with a current material pushing robot identity and abnormality data; transmitting the abnormality alarm information to the target user according to the result that the permission configuration information of the user matches with the abnormality information of the material pushing robot further comprises:
determining whether the current material pushing robot identity is the same as one of the one or more preset material pushing robot identities;
generating the abnormality alarm information according to the one or more alarming modalities and the abnormality data based on a result that the preset material pushing robot identity is the same as the one of the one or more preset material pushing robot identities; and
taking the user referred by the user identity as the target user, and transmitting the abnormality alarm information to the target user.

7. The method according to claim 6, wherein a number of the one or more preset material pushing robot identities is at least one, and a number of each of the one or more alarming modalities is at least one of a group consisting of a short message service message, an email, a phone, a small video, and an image.

8. A device for processing abnormality of material pushing robot comprising:
an abnormality alarming module, is configured to transmit abnormality alarm information to a target user and obtain real-time video data transmitted from the material pushing robot when receiving abnormality information of the material pushing robot;
a video data transmitting module, is configured to receive a remote monitoring request which is transmitted from the target user based on the abnormality alarm information, and transmit the real-time video data to a remote control terminal according to the remote monitoring request, and to cause the remote control terminal to determine a current position of the material pushing robot and a restoring position of the material pushing robot according to the real-time video data, and to generate a remote movement command according to the current position and the restoring position; and
a control command transmitting module, is configured to receive a remote control command returned by the remote control terminal, and transmit the remote movement command to the material pushing robot, and to cause the material pushing robot to move according to the remote movement command.

9. A server comprising:
one or more processors; and
a storage device storing one or more programs,
wherein, when the one or more programs are executed by the one or more processors, cause the one or more processor to execute the method for processing abnormality of material pushing robot as claimed in any one of claims 1-7.

10. A computer readable storage medium, on the computer readable storage medium where computer executable instructions being stored, wherein the executable instructions are used for executing the method for processing abnormality of material pushing robot as claimed in any one of claims 1-7 when the executable instructions being executed by one or more processors.
